# NEUE EUROPÄISCHE PATENTSCHRIFT

(11) **EP 2 451 665 B2**
(45) Veröffentlichungstag und Bekanntmachung des Hinweises auf die Entscheidung über den Einspruch: **14.03.2018**
(45) Hinweis auf die Patenterteilung: 30.10.2013
(21) Anmeldenummer: 10734912.8
(22) Anmeldetag: 07.07.2010
(51) Int. Cl.: B60N 2/46

(54) **SCHIEBEDACHVORRICHTUNG INSBESONDERE FÜR EIN KRAFTFAHRZEUG**
SLIDING ROOF DEVICE, IN PARTICULAR FOR A MOTOR VEHICLE
DISPOSITIF DE TOIT OUVRANT, EN PARTICULIER POUR UN VÉHICULE AUTOMOBILE

(30) Priorität: 10.07.2009 FR 0903404
(43) Veröffentlichungstag der Anmeldung: 16.05.2012
(73) Patentinhaber: Webasto SE, 82131 Stockdorf (DE)
(72) Erfinder: RENAUDIN, Fabrice, F-85700 Les Chatteliers Chateaumur (FR)
(74) Vertreter: Fischer & Konnerth
(86) Internationale Anmeldenummer: PCT/EP2010/004182
(87) Internationale Veröffentlichungsnummer: WO 2011/003617

(56) Entgegenhaltungen:
- EP-A1- 1 403 113
- DE-A1- 4 108 197
- DE-A1- 10 046 068
- FR-A1- 2 845 037
- US-B1- 6 659 541

## Beschreibung

Die vorliegende Erfindung betrifft eine Schiebedachvorrichtung gemäß dem Oberbegriff des Patentanspruchs 1.

Die Erfindung findet eine besonders vorteilhafte aber nicht ausschließliche Anwendung im Automobilsektor.

Bei den aus dem Stand der Technik bekannten Schiebedachvorrichtungen wird vielfach eine gleitend gelagerte Platte verwendet. Aus der DE 41 08 197 A1 ist ein Schiebedach bekannt, bei dem der vordere Bereich der beweglichen Platte an Schlitten angelenkt ist. Die Schlitten sind entlang seitlichen Führungsschienen gleitend gelagert, die zu beiden Seiten einer mittels der Platte abdeckbaren oder freilegbaren Dachöffnung positioniert sind. Der hintere Bereich der Platte ist am Ende von seitlichen Ausstellhebeln angelenkt, die entlang von zwei Führungsschienen gleitend montiert sind, die auf beiden Seiten des Dachs des Fahrzeugs angeordnet sind. Wenn eine solche Schiebedachvorrichtung mittels eines Motors betätigbar ist, erfolgt das Öffnen und Schließen der gleitenden Platte im Allgemeinen durch Verschiebeantrieb der vorderen Schlitten mit Hilfe von mit einem Elektromotor verbundenen Kabeln.

Diese Art von Schiebedach hat aber den Nachteil, dass dessen Mechanik einen relativ großen Bauraum erfordert. Ein solches Schiebedach hat aber noch andere Nachteile, die insbesondere mit der Hebelarmwirkung der hinteren Ausstellhebel zusammenhängen. Hierbei sind insbesondere die erforderliche Zusatzkraft am Ende der Schließphase und ein Rattern beim Verschieben der beweglichen Platte zu nennen. Aus der DE 100 46 068 A1 ist eine Schiebedachvorrichtung bekannt, die eine bewegliche Platte aufweist, deren vorderer Bereich in Fahrzeuglängsrichtung verschiebbar gelagert ist und deren hinterer Bereich an mindestens einem schwenkbar und in Fahrzeuglängsrichtung entlang einer in Längsrichtung angeordneten Führungsschiene verschiebbar gelagerten Ausstellhebel angelenkt ist, wobei die Schiebedachvorrichtung Antriebseinrichtungen aufweist, die die bewegliche Platte verschieben können, indem sie den Ausstellhebel direkt in Richtung einer Verschiebung in Fahrzeuglängsrichtung antreiben. Aus der US 6 659 541 B1 ist eine Schiebedachvorrichtung gemäß dem Oberbegriff des Anspruchs 1 bekannt.

So ist es die vom Gegenstand der vorliegenden Erfindung zu lösende Aufgabe, eine Schiebedachvorrichtung für ein Fahrzeug, insbesondere für ein Automobil, vorzuschlagen, die deutlich verbesserte Betriebseigenschaften und gleichzeitig eine einfachere Integration in das Fahrzeugdach ermöglicht.

Die Lösung der gestellten technischen Aufgabe liegt gemäß der vorliegenden Erfindung darin, dass die Schiebedachvorrichtung die Merkmale des Anspruchs 1 aufweist.

Es sollte betont werden, dass im gesamten Text alle Begriffe bezüglich einer Positionierung im Raum sich auf die Längsachse des Fahrzeugs und dessen normale Fahrtrichtung beziehen. Dies gilt insbesondere für die Begriffe "quer", "längs", "vorne" und "hinten".

Es ist ebenfalls wichtig klarzustellen, dass der Begriff Translation in einem erweiterten Sinn verstanden werden muss, d.h. dass er in gleicher Weise eine geradlinige Translation, eine gekrümmte Translation oder eine beliebige Kombination dieser beiden Bewegungsarten bezeichnet.

In jedem Fall bietet die Erfindung den Vorteil einer Mechanik, die ein schnelles Ausstellen des hinteren Bereichs der beweglichen Platte ermöglicht. Der von der Mechanik seitlich und in Längsrichtung benötigte Bauraum um die bewegliche Platte herum kann deutlich verringert werden. Die erfindungsgemäße Schiebedachvorrichtung kann daher viel einfacher in die zur Verfügung stehende begrenzte Höhe eines Fahrzeugsdachs eingebaut werden, wodurch sich sowohl aus rein technischer als auch aus ästhetischer Sicht Vorteile ergeben.

Die vorliegende Erfindung betrifft auch Merkmale der Unteransprüche und solche, die aus der nachfolgenden Beschreibung hervorgehen, und die einzeln oder in allen ihren möglichen technischen Kombinationen berücksichtigt werden müssen.

Diese Beschreibung, die als nicht einschränkendes Beispiel dient, soll besser verständlich machen, woraus die Erfindung besteht und wie sie durchgeführt werden kann. Sie erfolgt außerdem unter Bezug auf die beiliegenden Zeichnungen. Es zeigt:
- Fig. 1: ein Kraftfahrzeugdach mit einem eingesetzten Dachmodul, das eine erfindungsgemäße Schiebedachvorrichtung enthält, wobei die zur Schiebedachvorrichtung gehörende bewegliche Platte in geschlossener Stellung dargestellt ist,
- Fig.2: das Modul gemäß Fig. 1, wobei die bewegliche Platte in ausgestellter Position ist,
- Fig. 3: die zum Modul gemäß Figur 2 gehörende Schiebedachvorrichtung, wobei die bewegliche Platte in offener Stellung ist,
- Fig. 4: eine Ansicht wie Figur 3, aber gemäß einer Perspektive von unten,
- Fig. 5: eine Perspektive von oben analog zu derjenigen gemäß Figur 3, mit der beweglichen Platte während der Verschiebung zwischen ihrer geschlossenen Stellung und ihrer offenen Stellung,
- Fig. 6: eine der mechanischen Verbindungen, die den Halt und die Verschiebeführung des vorderen Bereichs der beweglichen Platte gewährleisten, wobei letztere in offener Stellung ist,
- Fig. 7: von innen gesehen eine der mechanischen Verbindungen, die den Halt und die Verschiebeführung des hinteren Bereichs der beweglichen Platte gewährleisten, wobei letztere sich zu Beginn der Offnungsphase befindet,
- Fig. 8: die mechanische Verbindung des hinteren Bereichs der beweglichen Platte eine Ansicht wie Figur 7 von außen betrachtet,
- Fig. 9: einen Querschnitt durch die mechanische Verbindung gemäß den Figuren 7 und 8,
- Fig. 10-11: Ansichten analog zu den Figuren 7 bzw. 8 mit der beweglichen Platte in geschlossener Stellung,
- Fig. 12-13: Ansichten wie in den Figuren 7 bzw. 8 mit der beweglichen Platte zu Beginn der Offnungsphase,
- Fig. 14: eine Ansicht analog zu Figur 8 mit der beweglichen Platte in ausgestellter Position,
- Fig. 15: eine Ansicht wie Figur 8 mit der beweglichen Platte mitten in der Verschiebephase,
- Fig. 16-22: Längsschnitte, die die Kinematik der zur Schiebedachvorrichtung gehörenden beweglichen Platte veranschaulichen, wobei

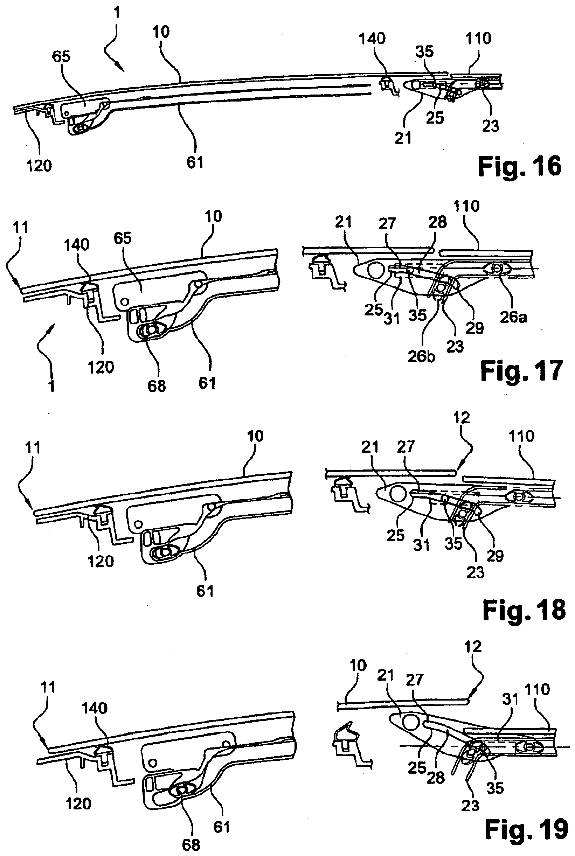

- Fig. 16: die bewegliche Platte in geschlossener Stellung,
- Fig. 17-19: die bewegliche Platte während der Verschiebung von der geschlossenen Stellung in die ausgestellte Position,

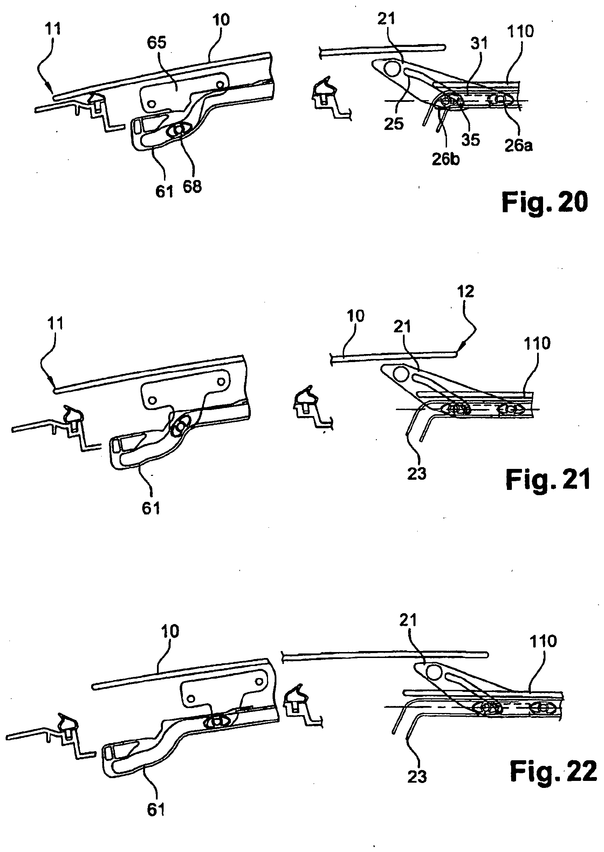

- Fig. 20: die bewegliche Platte in ausgestellter Position, und
- Fig. 21-22: die bewegliche Platte während der Verschiebung von der ausgestellten Position in die offene Stellung zeigen.

Aus Gründen der Klarheit wurden gleiche Elemente mit gleichen Bezugszeichen versehen. Auch wurden nur die für das Verständnis der Erfindung wichtigen Elemente dargestellt, und dies ohne Beachtung des Maßstabs und schematisch.

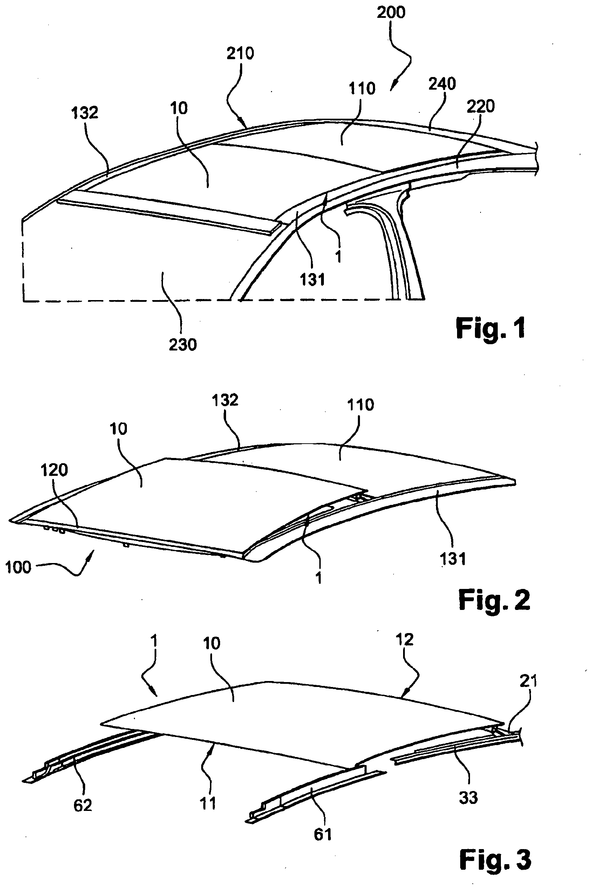

Figur 1 veranschaulicht ein Dach 210 eines Kraftfahrzeugs 200, das mit einer Schiebedachvorrichtung 1 ausgestattet ist, die eine bewegliche Platte 10 aus Glas verwendet. In dieser besonderen Ausführungsform, die nur als Beispiel gewählt wird, ist die Schiebedachvorrichtung 1 in ein Modul 100 integriert, das zwei Glasplatten, nämlich die bewegliche vordere Platte 10 und eine feste hintere Platte 110, vereint. Das Modul 100 nimmt praktisch die ganze Fläche des Fahrzeugdachs ein, da es in Querrichtung den ganzen zwischen den zwei oberen Seitenholmen 220 liegenden Raum bedeckt, während es sich in Längsrichtung praktisch von der Windschutzscheibe 230 bis zum Heckfenster erstreckt, wodurch der verblechte Bereich des Fahrzeugdachs auf einen einfachen Streifen 240 über einem hinteren Querholm reduziert wird.

Wie man in Figur 2 sehen kann, verwendet das Modul 100 einen Rahmen 120, der als Träger für die Schiebedachvorrichtung 1 und für die feste hintere Platte 110 dient, wodurch dem Ganzen ein einheitlicher und modularer Charakter verliehen wird. Der Rahmen 120 gewährleistet ebenfalls eine Verbindungsfunktion mit der Karosserie des Fahrzeugs 200, da er so gestaltet ist, dass er direkt auf dem Kastenaufbau des Fahrzeugs 200 befestigt werden kann. Zwei Zierleisten 131, 132 bedecken die Seitenprofile des Rahmens 120.

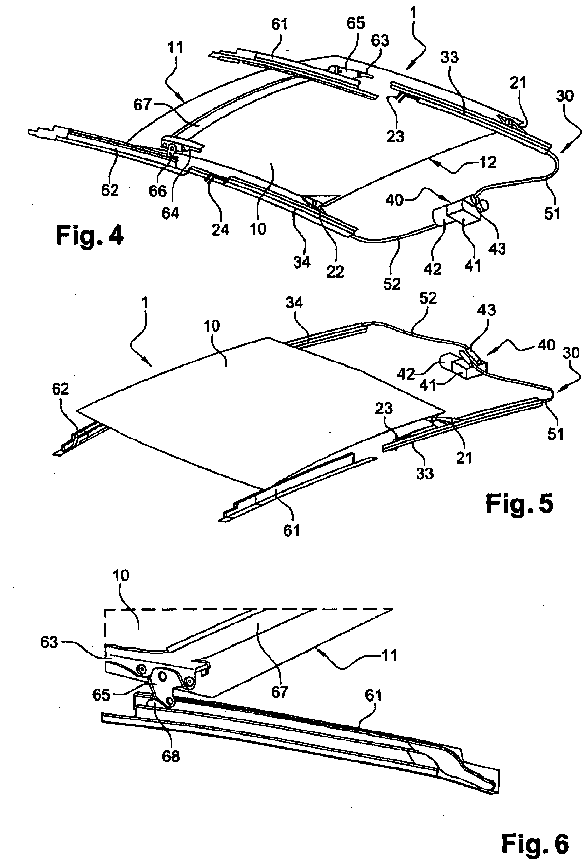

Figur 3 zeigt, dass die Schiebedachvorrichtung 1 mit einer Platte 10 versehen ist, deren vorderer Bereich 11 für eine Verschiebung in Längsrichtung des Fahrzeugs bewegbar gelagert ist, und deren hinterer Bereich 12 an mindestens einem Ausstellhebel 21, 22 angelenkt ist, der ebenfalls für eine Verschiebung in Längsrichtung des Fahrzeugs bewegbar gelagert ist. Die Einheit ist so angeordnet, dass die Platte 10 zwischen einer geschlossenen Stellung (Figur 1), in der sie eine im Dach 210 des Fahrzeugs 200 ausgesparte Öffnung verschließen kann, und einer offenen Stellung (Figuren 3 und 4) schiebebeweglich ist, in der sie sich zum großen Teil in Abstand zur Öffnung erstrecken kann und diese weitestgehend freilegt.

Die Figuren 4 und 5 zeigen, dass gemäß dem Gegenstand der vorliegenden Erfindung die Schiebedachvorrichtung 1 außerdem über Antriebseinrichtungen 30 verfügt, die die bewegliche Platte 10 verschieben können, indem sie direkt jeden Ausstellhebel 21, 22 für eine Verschiebung in Längsrichtung des Fahrzeugs antreiben.

In diesem Ausführungsbeispiel ist der vordere Bereich 11 der beweglichen Platte 10 an zwei vorderen Führungsschienen 61, 62 gleitend gelagert, die zu beiden Seiten der Öffnung positioniert sind. Konkret, und wie man es in den Figuren 4 und 6 sehen kann, sind zwei Winkelbeschläge 63, 64 unter jeder Ecke des vorderen Bereichs 11 der beweglichen Platte 10 montiert und über einen Verstärkungsquerträger 67 verbunden. Jeder Winkelbeschlag 63, 64 dient außerdem als Verankerungspunkt für eine Traglasche 65, 66, an deren Ende ein Gleitstück 68 drehbar gelagert ist, das entlang der entsprechenden Führungsschiene 61, 62 gleiten kann.

Der hintere Bereich 12 der beweglichen Platte 10 ist seinerseits an zwei seitlichen Ausstellhebeln 21, 22 angelenkt, die an zwei hinteren Führungsschienen 23, 24 gleitend gelagert sind, die auf jeder Seite des Dachs 210 des Fahrzeugs 200 im Wesentlichen auf der gleichen Achse fluchtend zu den Führungsschienen 61, 62 angeordnet sind.

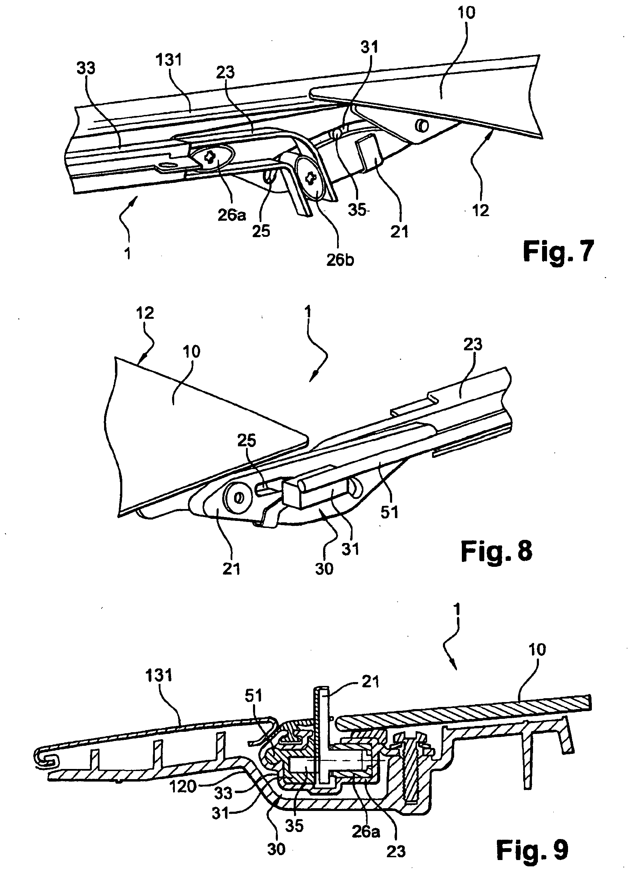

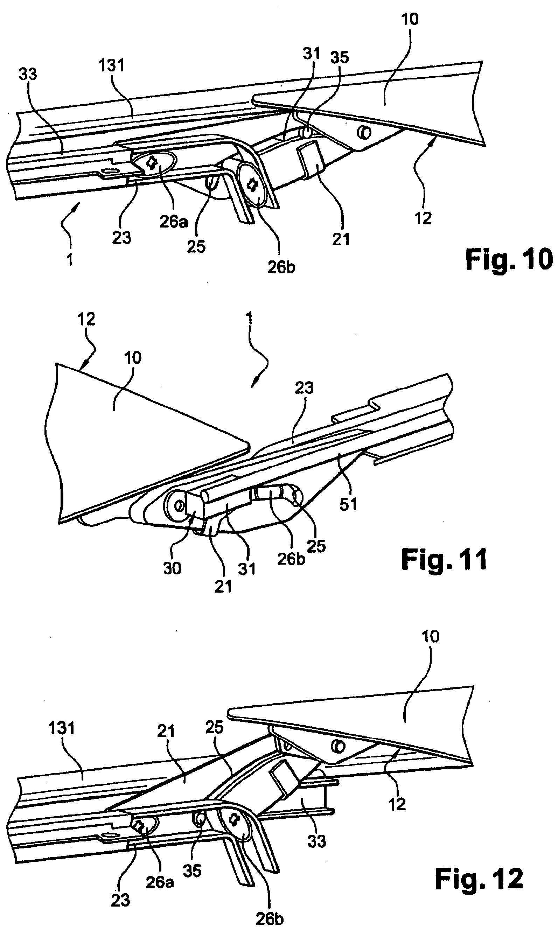

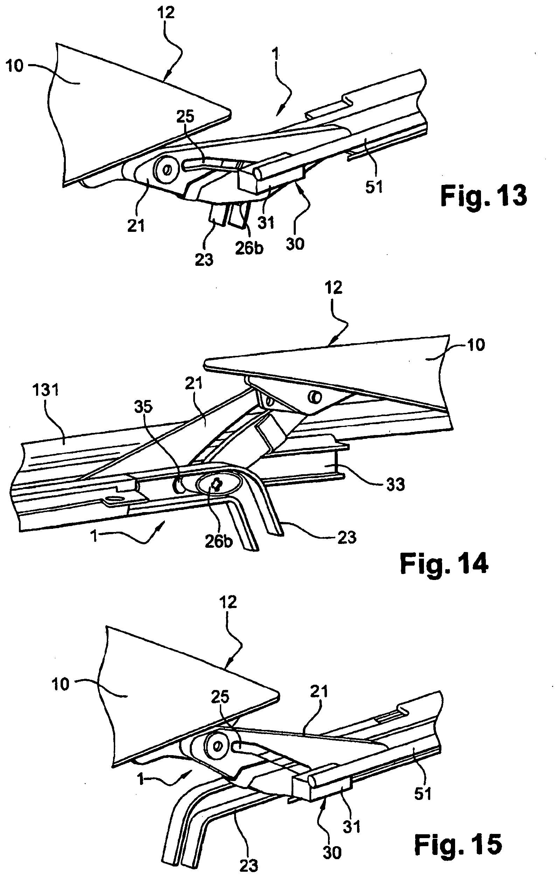

Die Figuren 7 bis 15 zeigen, dass jede hintere Führungsschiene 23, 24 einen vorderen Teil hat, der zur Innenseite des Fahrzeugs 200 nach unten geneigt ist und sich sogar unterhalb der Höhe der Öffnung erstreckt. Die Einheit ist so angeordnet, dass, wenn die bewegliche Platte 10 in der geschlossenen Stellung ankommt, jeder geneigte Schienenteil der Führungsschienen 23, 24 in der Lage ist, den entsprechenden Ausstellhebel 21, 22 im Wesentlichen in der Ebene der Öffnung kippen zu lassen, und dadurch den hinteren Bereich 12 der beweglichen Platte 10 bezüglich der festen hinteren Platte 110 bündig zu positionieren.

Die Figuren 7 bis 15 zeigen auch, dass jeder Ausstellhebel 21, 22 in seiner zugeordneten hinteren Führungsschiene 23, 24 mit Hilfe von zwei unabhängigen Gleitstücken 26a, 26b gleitet.

Gemäß einer Besonderheit der Erfindung sind die Antriebseinrichtungen 30 zunächst mit mindestens einem Schlitten 31 versehen, der mit einem Ausstellhebel 21, 22 antriebsgekoppelt und translationsbeweglich in einer Richtung im Wesentlichen parallel zur Verschieberichtung der beweglichen Platte 10 montiert ist. Außerdem sind die Antriebseinrichtungen 30 ebenfalls mit Treibeinrichtungen 40 versehen, die mit jedem Schlitten 31 über ein drucksteif geführtes biegsames Verbindungsorgan 51, 52, beispielsweise in Form eines Antriebskabels verbunden sind und simultan jeden Ausstellhebel 21, 22 verschieben können, indem sie gleichzeitig jeden Schlitten 31 in Längstranslation antreiben.

Es ist wichtig zu betonen, dass die Tatsache, dass ein Schlitten 31 mit einem Ausstellhebel 21, 22 antriebsgekoppelt ist, bedeutet, dass diese zwei Elemente im weiten Sinn des Wortes fest miteinander verbunden sind, d.h. dass sie miteinander verbunden sind, ohne dass deshalb die betreffende Verbindung notwendigerweise starr ist.

Es ist weiter anzumerken, dass in diesem Ausführungsbeispiel die Schiebedachvorrichtung 1 motorisiert ist, und dass die Treibeinrichtungen 40 einen Stellmotor 41 umfassen, der in klassischer Weise einen Elektromotor 42 und ein Getriebe 43 vereinigt. Man kann aber auch durchaus vorsehen, dass die Schiebedachvorrichtung 1 manuell gesteuert wird und zum Beispiel über Treibeinrichtungen 40 verfügt, die in Form eines manuell mittels einer Kurbel betätigbaren Mechanismus vorliegen.

Schließlich sollte klargestellt werden, dass jedes biegsame Verbindungsorgan 51, 52 a priori von beliebiger Beschaffenheit und/oder beliebigem Aufbau sein kann. In besonders vorteilhafter Weise besteht aber jedes biegsame Verbindungsorgan 51, 52 dieses Ausführungsbeispiels hier vorteilhafterweise aus einem Antriebskabel.

Gemäß einer bevorzugten Ausführungsform der Erfindung weisen die Antriebseinrichtungen 30 einen Schlitten 31 für jeden an der beweglichen Platte 10 angelenkten Ausstellhebel 21, 22 auf. Jeder Schlitten 31 ist mit den Treibeinrichtungen 40 über ein ihm eigenes biegsames Verbindungsorgan 51, 52 verbunden. Die Einheit ist so angeordnet, dass die Treibeinrichtungen 40 fähig sind, simultan beide Schlitten 31, 32 zu verschieben, indem sie gleichzeitig an allen biegsamen Verbindungsorganen 51, 52 ziehen oder drücken.

In besonders vorteilhafter Weise ist jeder Schlitten 31 entlang einer hinteren Führungsschiene 33, 34 gleitend montiert, die sich im Wesentlichen parallel zur Verschieberichtung der beweglichen Platte 10 erstreckt.

Gemäß einem anderen vorteilhaften Merkmal der Erfindung ist jeder Ausstellhebel 21, 22, der an der beweglichen Platte 10 angelenkt ist, entlang einer weiteren hinteren Führungsschiene 23, 24 gleitend gelagert, die in Längsrichtung angeordnet ist. Die hintere Führungsschiene 33, 34 jedes Schlittens 31 ist in Höhe der weiteren hinteren Führungsschiene 23, 24 eingebaut, die dem entsprechenden Ausstellhebel 21, 22 zugeordnet ist. Aufgrund der Tatsache, dass die Führungsschiene 33, 34 eines Schlittens 31 in Höhe der Führungsschiene 23, 24 des entsprechenden Ausstellhebels 21, 22 eingebaut ist, können diese zwei Elemente vorteilhaft Teile eines einzigen Bauteils sein.

Gemäß einer weiteren Besonderheit der Erfindung, die insbesondere in den Figuren 7 bis 15 zu sehen ist, ist jeder Schlitten 31 mit dem entsprechenden Ausstellhebel 21, 22 mittels eines in Form eines Fingers ausgebildeten Kupplungselements 35 antriebsgekoppelt, der durch Gleiten mit einer Führung 25 zusammenwirkt, wobei der Finger 35 mit dem Schlitten 31 fest verbunden und die Führung 25 am jeweiligen Ausstellhebel 21, 22 angeordnet ist.

Dieses Merkmal ermöglicht es, die Kräfte beim Schließen zu minimieren. Das Gleiten des Kupplungselements 35 in der Führung 25 bietet nämlich die Möglichkeit, die Schließphase der beweglichen Platte 10 aufzugliedern, indem die Führung 25 dementsprechend gestaltet wird.

In diesem Zusammenhang zeigen die Figuren 16 bis 23, dass jede Führung 25 eine allgemein gebogene Form hat, die in drei Abschnitte aufgegliedert werden kann.

Man stellt zunächst fest, dass die Führung 25 mit einem ersten, im Wesentlichen geradlinigen Abschnitt 27 versehen ist, der sich im Wesentlichen parallel zur Verschieberichtung des Schlittens 31 erstreckt, wenn die bewegliche Platte 10 nahe ihrer geschlossenen Stellung ist (Figur 16). Die Anordnung ist so ausgebildet, dass das entsprechende Kupplungselement 35 in der Lage ist, entlang des ersten Abschnitts 27 zu gleiten, wenn die bewegliche Platte 10 nahe ihrer geschlossenen Stellung ist.

Dieses Merkmal ermöglicht es, ganz zu Beginn einer Öffnungsphase sowie an jedem Ende einer Schließphase der beweglichen Platte 10 über einen Leerlauf zu verfügen.

Die Führung 25 ist weiterhin mit einem zweiten, im Wesentlichen geradlinigen Abschnitt 28 versehen ist, der sich schräg bezüglich der Verschieberichtung des Schlittens 31 erstreckt, wenn die bewegliche Platte 10 sich am Beginn der Öffnungsphase oder am Ende der Schließphase befindet (Figuren 17 bis 19). Die Anordnung ist so ausgebildet, dass das entsprechende Kupplungselement 35 entlang des zweiten Abschnitts 28 gleiten kann, wenn die bewegliche Platte 10 sich tatsächlich am Beginn der Öffnungsphase oder am Ende der Schließphase befindet.

Dieses Merkmal ermöglicht es, einen progressiven Antrieb der Ausstellhebel 21, 22 durch den Schlitten 31 zu erzeugen.

Die Führung 25 weist weiterhin einen dritten, im Wesentlichen geradlinigen Abschnitt 29 auf, der sich im Wesentlichen lotrecht zur Verschieberichtung des Schlittens 31 erstreckt, wenn die bewegliche Platte 10 mitten in der Öffnungsphase oder mitten in der Schließphase ist (Figuren 20 bis 22). Die Anordnung ist so ausgebildet, dass das entsprechende Kupplungselement 35 in dem dritten Abschnitt 29 zum Stillstand kommt, wenn die bewegliche Platte 10 sich ab der vollständigen Ausstellposition ihrer Hinterkante gemäß Fig. 20 und bei der weiteren Verschiebung nach hinten in der Öffnungsphase oder bei einer umgekehrten Bewegung nach vorne in der Schließphase befindet.

Dieses Merkmal ermöglicht es, die Ausstellhebel 21, 22 und den Schlitten 31 praktisch starr zu koppeln, während die bewegliche Platte 10 sich zwischen ihrer ausgestellten Stellung und ihrer vollständig geöffneten Stellung verschiebt. Der Antrieb der Ausstellhebel 21, 22 durch den Schlitten 31 erfolgt dann direkt, wobei die von den Treibeinrichtungen 40 auf den Schlitten 31 ausgeübten Zug- oder Schubkräfte vollständig auf die Ausstellhebel 21, 22 übertragen werden.

Es ist anzumerken, dass in den drei oben erwähnten Fällen die Ausrichtung des betrachteten Abschnitts 27, 28, 29 der Führungen 25 bezüglich der Verschieberichtung des Schlittens 31 sowohl von deren eigener Anordnung auf den Ausstellhebeln 21, 22 als auch von der Stellung der Ausstellhebel 21, 22 gegenüber der Verschieberichtung des Schlittens 31 abhängt.

Die Längsschnitte der Figuren 16 bis 23 ermöglichen es, die Betriebskinematik der oben beschriebenen Schiebedachvorrichtung 1 gut zu verstehen.

Figur 16 zeigt insbesondere, dass die Platte 10 in der geschlossenen Stellung an die feste hintere Platte 110 bündig anschließt. Eine Lippendichtung 140 erstreckt sich über den ganzen Umriss des die Öffnung begrenzenden Rahmenteils 120, um eine Dichtheit gegenüber der beweglichen Platte 10 zu gewährleisten, wenn diese wie hier in der geschlossenen Stellung ist. Da sie in Höhe des vorderen geneigten Endes ihrer Führungsschiene 23 positioniert ist, erstreckt sich der Ausstellhebel 21 im Wesentlichen waagerecht innerhalb der Öffnung. Das Kupplungselement 35 ist im ersten Abschnitt 27 der Führung 25 positioniert. Dies bedeutet, dass die Verbindung zwischen dem Schlitten 31 und dem Ausstellhebel 21 an einem Punkt erfolgt, der sich so nahe wie möglich an der beweglichen Platte 10 befindet, was es ermöglicht, die Verriegelung des Ausstellhebels 21 in geschlossener Stellung zu optimieren.

Die Öffnungsphase der beweglichen Platte 10 beginnt durch die Aktivierung des Stellmotors 41, damit dieser über das Kabel 51 (in den Figuren 16 - 22 nicht dargestellt) eine Zugkraft auf den Schlitten 31 ausübt und so das Gleiten des Schlittens 31 entlang seiner Führungsschiene 33 (Figur 17) bewirkt, wobei letztere auch hier aus Gründen der Klarheit nicht dargestellt ist. Während dieses allerersten Anfangs der Öffnungsphase gleitet das Kupplungselement 35 im ersten Abschnitt 27 der Führung 25, was aufgrund der Tatsache, dass der erste Abschnitt 27 hierbei im Wesentlichen zur Verschieberichtung des Schlitten 31 kollinear ist, zu keiner signifikanten Verschiebung der beweglichen Platte 10 führt.

Wie man in Figur 18 sehen kann, erfolgt die Öffnung der beweglichen Platte 10 effektiv, wenn das Kupplungselement 35 den zweiten Abschnitt 28 der Führung 25 erreicht. In dem Maße, in dem der Schlitten 31 seine Translationsbewegung nach hinten fortsetzt, wird der Ausstellhebel 21 progressiv in Verschieberichtung nach hinten angetrieben aufgrund der Tatsache, dass der zweite Abschnitt 28 der Führung 25 dann bezüglich der Gleitrichtung des Schlittens 31 geneigt ist. Daraus ergibt sich gleichzeitig ein ebenso graduelles Aufrichten des Ausstellhebels 21.

Wenn das Kupplungselement 35 das hintere Ende des zweiten Abschnitts 28 der Führung 25 wie in Figur 19 erreicht, befindet sich die bewegliche Platte 10 nahe ihrer ausgestellten Position. Ihr vorderer Bereich ist dabei nur sehr wenig nach hinten verfahren, während ihr hinterer Bereich 12 seinerseits signifikant angehoben ist.

Die ausgestellte Position wird endgültig erreicht, sobald das Kupplungselement 35 sich in den dritten Abschnitt 29 der Führung 25 gemäß Figur 20 einfügt. Die Tatsache, dass der Ausstellhebel 21 nun im Wesentlichen starr mit dem Schlitten 31 verbunden ist, ermöglicht es, diese Stellung dauerhaft beizubehalten, während die Treibeinrichtungen 40 zeitweise deaktiviert sind und aufgrund ihrer Selbsthemmung den Schlitten 31 in dieser Position halten. Der vordere Bereich 11 der beweglichen Platte 10 ist genau in diesem Moment noch relativ weit abgesenkt mit seiner Unterseite in Anlage an der vorderen Dichtung und gut stabilisiert aufgrund der Tatsache, dass das Gleitstück 68 sich in einem im Wesentlichen waagrechten Zwischenabschnitt seiner Führungsschiene 61 befindet.

Wie man in Figur 21 sehen kann, treten, wenn der Schlitten 31 weiter nach hinten angetrieben wird, wenig Geometrieveränderungen in Höhe des hinteren Bereichs 12 der beweglichen Platte 10 auf, da sich die Platte 10 bei der weiteren Öffnungsbewegung nur in einer rein linearen Translationsrichtung bewegt. In Höhe des vorderen Bereichs 11 ist dies anders, da dieser gezwungen wird, dem Aufstieg des geneigten Teils seiner Führungsschiene 61 zu folgen.

Wenn dieser Vorgang beendet ist, befindet sich der vordere Bereich 11 der beweglichen Platte 10 ebenfalls angehoben, wie in den Figuren 21 und 22. Die Verschiebung der beweglichen Platte 10 nach hinten setzt sich also durch einfaches Gleiten in Höhe der im Wesentlichen geradlinigen Teile der Führungsschienen 61, 62 bezüglich ihres vorderen Bereichs 11 und in Höhe der im Wesentlichen geradlinigen Teile der Führungsschienen 23, 24 bezüglich ihres hinteren Bereichs 12 fort, und dies bis zum Erreichen der vollständig geöffneten Stellung. Man stellt fest, dass hierbei die Verbindung zwischen dem Schlitten 31 und dem Ausstellhebel 21 an einem Punkt erfolgt, der sich zwischen den zwei Gleitstücken 26a, 26b befindet, was es ermöglicht, vorteilhafterweise die Gefahren eines Ratterns des Ausstellhebels 21 zu reduzieren.

Da das Schließen der beweglichen Platte 10 gemäß einer im Wesentlichen umgekehrten Kinematik erfolgt, wird es hier nicht weiter beschrieben.

Natürlich betrifft die Erfindung allgemeiner jedes Fahrzeug, das mindestens eine vorstehend beschriebene Schiebedachvorrichtung 1 aufweist.

## Patentansprüche

1. Schiebedachvorrichtung (1) für ein Fahrzeug (200), insbesondere für ein Automobil, die eine bewegliche Platte (10) aufweist, deren vorderer Bereich (11) in Fahrzeuglängsrichtung verschiebbar gelagert ist und deren hinterer Bereich (12) an mindestens einem schwenkbar und in Fahrzeuglängsrichtung entlang einer in Längsrichtung angeordneten Führungsschiene (23, 24) verschiebbar gelagerten Ausstellhebel (21, 22) angelenkt ist,
wobei die Schiebedachvorrichtung (1) Antriebseinrichtungen (30) aufweist, die die bewegliche Platte (10) verschieben können, indem sie den Ausstellhebel (21, 22) direkt in Richtung einer Verschiebung in Fahrzeuglängsrichtung antreiben,
wobei jeder Ausstellhebel (21, 22) in seiner zugeordneten Führungsschiene (23, 24) mit Hilfe von zwei Gleitstücken (26a, 26b) gleitet,
ein vorderer Teil der Führungsschiene (23, 24) nach unten geneigt Ist und zum Schließen der beweglichen Platte (10) der angetriebene Ausstellhebel (21, 22) nach unten kippt, indem das vordere Gleitstück (26b) der zwei Gleitstücke (26a, 26b) in den nach unten geneigten vorderen Teil der Führungsschiene (23, 24) abgesenkt wird,
wobei die Antriebseinrichtungen (30) mindestens einen Schlitten (31), der mit einem Ausstellhebel (21, 22) antriebsgekoppelt und gemäß einer Richtung im Wesentlichen parallel zur Verschieberichtung der beweglichen Platte (10) verschiebbar gelagert ist, sowie Treibeinrichtungen (40) aufweisen, die mit Jedem Schlitten (31) über ein biegsames Verbindungsorgan (51) verbunden sind und simultan jeden Ausstellhebel (21, 22) verschieben können, indem sie gleichzeitig jeden Schlitten (31) in Richtung der Verschiebung In Fahrzeuglängsrichtung antreiben,
**dadurch gekennzeichnet,**
**dass** jeder Schlitten (31) mit dem entsprechenden Ausstellhebel (21, 22) über ein mit dem Schlitten (31) verbundenes Kupplungselement (35) antriebsgekoppelt ist, das mit einer am Ausstellhebel (21, 22) angeordneten Führung (25) zusammenwirkt.

2. Schiebedachvorrichtung (1) nach Anspruch 1,
**dadurch gekennzeichnet, dass** die Antriebseinrichtungen (30) einen Schlitten (31) für jeden Ausstellhebel (21, 22) aufweisen, der an der beweglichen Platte (10) angelenkt ist, und dass jeder Schlitten (31) mit den Treibeinrichtungen (40) über ein ihm eigenes biegsames Verbindungsorgan (51, 52) verbunden ist.

3. Schiebedachvorrichtung (1) nach Anspruch 1 oder 2,
**dadurch gekennzeichnet, dass** jeder Schlitten (31) an einer Führungsschiene (33, 34) verschiebbar gelagert ist, die im Wesentlichen parallel zur Verschieberichtung der beweglichen Platte (10) verläuft.

4. Schiebedachvorrichtung (1) nach einem der Ansprüche 1 bis 3,
**dadurch gekennzeichnet, dass** jeder Ausstellhebel (21, 22) entlang einer in Längsrichtung angeordneten Führungsschiene (23, 24) verschiebbar gelagert ist, die in Höhe der Führungsschiene (33, 34) des Schlittens (31) eingebaut ist, die dem entsprechenden Ausstellhebel (21, 22) zugeordnet ist.

5. Schiebedachvorrichtung (1) nach einem der Ansprüche 1 bis 4,
**dadurch gekennzeichnet, dass** jede Führung (25) einen ersten, im Wesentlichen geradlinigen Abschnitt (27) aufweist, der sich bei geschlossener Platte (10) im Wesentlichen parallel zur Verschieberichtung des Schlittens (31) erstreckt, und dass das Kupplungselement (35) entlang des ersten Abschnitts (27) gleiten kann, wenn die bewegliche Platte (10) nahe ihrer geschlossenen Stellung ist.

6. Schiebedachvorrichtung (1) nach einem der Ansprüche 1 bis 5,
**dadurch gekennzeichnet, dass** jede Führung (25) einen zweiten, im Wesentlichen geradlinigen Abschnitt (28) aufweist, der sich schräg bezüglich der Verschieberichtung des Schlittens (31) erstreckt, wenn die bewegliche Platte (10) sich am Beginn der Öffnungsphase oder am Ende der Schließphase befindet, und dass das entsprechende Kupplungselement (35) entlang des zweiten Abschnitts (28) gleiten kann, wenn die bewegliche Platte (10) sich am Beginn der Öffnungsphase oder am Ende der Schließphase befindet.

7. Schiebedachvorrichtung (1) nach einem der Ansprüche 1 bis 6,
**dadurch gekennzeichnet, dass** jede Führung (25) einen im Wesentlichen geradlinigen, dritten Abschnitt (29) aufweist, der sich im Wesentlichen lotrecht zur Verschieberichtung des Schlittens (31) erstreckt, wenn die bewegliche Platte (10) im letzten Teil ihrer Öffnungsphase oder im ersten Teil ihrer Schließphase ist, und dass das entsprechende Kupplungselement (35) sich in dem dritten Abschnitt (29) festsetzen kann, wenn die bewegliche Platte (10) sich in der jeweiligen Öffnungsphase oder Schließphase befindet.

8. Kraftfahrzeug (200), **dadurch gekennzeichnet, dass** es mindestens eine Schiebedachvorrichtung (1) nach einem der vorhergehenden Ansprüche aufweist.

## Claims

1. Sliding roof device (1) for a vehicle (200), in particular for an automobile, which comprises a movable panel (10), the front region (11) thereof being displaceably mounted in the longitudinal direction of the vehicle and the rear region (12) thereof being articulated to at least one deployment lever (21, 22) mounted pivotably and displaceably in the longitudinal direction of the vehicle along a guide rail (23, 24) arranged in the longitudinal direction,
the sliding roof device (1) comprising drive devices (30) which are able to displace the movable panel (10), by directly driving the deployment lever (21, 22) in the direction of a displacement in the longitudinal direction of the vehicle,
wherein each deployment lever (21, 22) in its assigned guide rail (23, 24) slides by means of two sliding pieces (26a, 26b),
wherein a front part of the guide rail (23, 24) is inclined downwards and
wherein, for the closure of the movable panel (10), the driven deployment lever (21, 22) tilts downwards by virtue of the front sliding piece (26b) of the two sliding pieces (26a, 26b) being lowered into the downwardly inclined front part of the guide rail (23, 24),
wherein the drive devices (30) comprise at least one sliding member (31) which is coupled in terms of drive to a deployment lever (21, 22) and is displaceably mounted in a direction substantially parallel to the direction of displacement of the movable panel (10), as well as drive mechanisms (40) which are connected to each sliding member (31) via a flexible connecting member (51) and which are able to displace each deployment lever (21, 22) simultaneously, by driving each sliding member (31) at the same time in the direction of displacement in the longitudinal direction of the vehicle,
**characterized in that** each sliding member (31) is coupled in terms of drive to the corresponding deployment lever (21, 22) via a coupling element (35) which is connected to the sliding member (31) and which cooperates with a guide (25) arranged on the deployment lever (21, 22).

2. Sliding roof device (1) according to Claim 1, **characterized in that** the drive devices (30) comprise a sliding member (31) for each deployment lever (21, 22) which is articulated to the movable panel (10) and **in that** each sliding member (31) is connected to the drive mechanisms (40) via a dedicated flexible connecting member (51, 52).

3. Sliding roof device (1) according to one of Claims 1 or 2, **characterized in that** each sliding member (31) is displaceably mounted on a guide rail (33, 34) which extends substantially parallel to the direction of displacement of the movable panel (10).

4. Sliding roof device (1) according to one of Claims 1 to 3, **characterized in that** each deployment lever (21, 22) is displaceably mounted along a guide rail (23, 24) which is arranged in the longitudinal direction and which is installed level with the guide rail (33, 34) of the sliding member (31) which is assigned to the corresponding deployment lever (21, 22) .

5. Sliding roof device (1) according to one of Claims 1 to 4, **characterized in that** each guide (25) comprises a first, substantially straight portion (27) which extends substantially parallel to the direction of displacement of the sliding member (31) when the panel is closed (10) and **in that** the coupling element (35) is able to slide along the first portion (27) when the movable panel (10) is in the vicinity of its closed position.

6. Sliding roof device (1) according to one of Claims 1 to 5, **characterized in that** each guide (25) comprises a second, substantially straight portion (28) which extends obliquely relative to the direction of displacement of the sliding member (31) when the movable panel (10) is at the start of the opening phase or at the end of the closing phase and **in that** the corresponding coupling element (35) is able to slide along the second portion (28) when the movable panel (10) is located at the start of the opening phase or at the end of the closing phase.

7. Sliding roof device (1) according to one of Claims 1 to 6, **characterized in that** each guide (25) comprises a third, substantially straight portion (29) which extends substantially perpendicular to the direction of displacement of the sliding member (31) when the movable panel (10) is in the last part of its opening phase or in the first part of its closing phase, and **in that** the corresponding coupling element (35) is able to be secured in the third portion (29) when the movable panel (10) is in the respective opening phase or closing phase.

8. Motor vehicle (200) **characterized in that** it comprises at least one sliding roof device (1) according to one of the preceding claims.

## Revendications

1. Dispositif de toit ouvrant (1) pour un véhicule (200), notamment pour une automobile, comprenant un panneau mobile (10) dont la partie avant (11) est montée coulissante dans la direction longitudinale du véhicule et dont la partie arrière (12) est articulée à au moins un levier d'ouverture (21, 22) monté de manière pivotante et déplaçable dans la direction longitudinale du véhicule le long d'un rail de guidage (23, 24) disposé dans la direction longitudinale,
dans lequel le dispositif de toit ouvrant (1) présente des moyens d'entraînement (30) qui peuvent déplacer le panneau mobile (10) en ce qu'ils entraînent directement le levier d'ouverture (21, 22) dans la direction d'un déplacement dans la direction longitudinale du véhicule,
dans lequel chaque levier d'ouverture (21, 22) glisse dans son rail de guidage associé (23, 24) à l'aide de deux coulisseaux (26a, 26b),
dans lequel une partie avant du rail de guidage (23, 24) est inclinée vers le bas et
dans lequel pour fermer le panneau mobile (10), le levier d'ouverture entraîné (21, 22) bascule vers le bas, en ce que le coulisseau avant (26b) des deux coulisseaux (26a, 26b) est abaissé dans la partie avant inclinée vers le bas du rail de guidage (23, 24),
dans lequel les moyens d'entraînement (30) comportent au moins un chariot (31) qui est accouplé en entraînement à un levier d'ouverture (21, 22) et qui est monté coulissant dans une direction sensiblement parallèle à la direction de déplacement du panneau mobile (10), ainsi que des moyens moteurs (40) qui sont reliés à chaque chariot (31) par l'intermédiaire d'un organe de liaison souple (51), et qui sont aptes à déplacer simultanément chaque levier d'ouverture (21, 22) en entraînant simultanément chaque chariot (31) dans la direction du déplacement dans la direction longitudinale du véhicule,
**caractérisé en ce que** chaque chariot (31) est accouplé en entraînement au levier d'ouverture correspondant (21, 22) par l'intermédiaire d'un élément d'accouplement (35) connecté au chariot (31) et qui coopère avec un guide (25) disposé au niveau dudit levier d'ouverture (21, 22).

2. Dispositif de toit ouvrant (1) selon la revendication 1, **caractérisé en ce que** les moyens d'entraînement (30) comportent un chariot (31) pour chaque levier d'ouverture (21, 22), lequel est articulé au panneau mobile (10), et **en ce que** chaque chariot (31) est relié aux moyens moteurs (40) par l'intermédiaire d'un organe de liaison souple (51, 52) qui lui est propre.

3. Dispositif de toit ouvrant (1) selon l'une des revendications 1 ou 2, **caractérisé en ce que** chaque chariot (31) est monté coulissant le long d'un rail de guidage (33, 34) sensiblement parallèle à la direction de déplacement du panneau mobile (10).

4. Dispositif de toit ouvrant (1) selon l'une quelconque des revendications 1 à 3, **caractérisé en ce que** chaque levier d'ouverture (21, 22) est monté coulissant le long d'un rail de guidage (23, 24) disposé dans la direction longitudinale et intégré au niveau du rail de guidage (33, 34) du chariot (31) qui est associé au levier d'ouverture correspondant (21, 22).

5. Dispositif de toit ouvrant (1) selon l'une quelconque des revendications 1 à 4, **caractérisé en ce que** chaque guide (25) comporte une première section (27) sensiblement rectiligne qui s'étend de façon sensiblement parallèle à la direction de déplacement du chariot (31) lorsque le panneau (10) est fermé, et **en ce que** l'élément d'accouplement (35) est apte à coulisser le long de ladite première section (27) lorsque le panneau mobile (10) est proche de sa position fermée.

6. Dispositif de toit ouvrant (1) selon l'une des revendications 1 à 5, **caractérisé en ce que** chaque guide (25) comporte une seconde section (28) sensiblement rectiligne qui s'étend de façon oblique par rapport à la direction de déplacement du chariot (31) lorsque le panneau mobile (10) est en début de phase d'ouverture ou en fin de phase d'ouverture, et **en ce que** l'élément d'accouplement correspondant (35) est apte à coulisser le long de ladite seconde section (28) lorsque le panneau mobile (10) est en début de phase d'ouverture ou en fin de phase de fermeture.

7. Dispositif de toit ouvrant (1) selon l'une quelconque des revendications 1 à 6, **caractérisé en ce que** chaque guide (25) comporte une troisième section (29) sensiblement rectiligne qui s'étend de façon sensiblement perpendiculaire à la direction de déplacement du chariot (31) lorsque le panneau mobile (10) est dans la dernière partie de sa phase d'ouverture ou dans la première partie de sa phase de fermeture, et **en ce que** l'élément d'accouplement correspondant (35) est apte à s'immobiliser dans ladite troisième section (29) lorsque le panneau mobile (10) est en phase d'ouverture ou en phase de fermeture.

8. Véhicule automobile (200), **caractérisé en ce qu'**il comporte au moins un dispositif de toit ouvrant (1) selon l'une quelconque des revendications précédentes.
